Europäisches Patentamt

European Patent Office

Office européen des brevets

(11) Publication number: **0 066 946**
**A1**

## (12) EUROPEAN PATENT APPLICATION

(21) Application number: **82302030.0**

(22) Date of filing: **20.04.82**

(51) Int. Cl.³: **A 01 N 25/02, A 01 N 57/20**

(30) Priority: **19.05.81 GB 8115253**

(43) Date of publication of application: **15.12.82**
**Bulletin 82/50**

(84) Designated Contracting States: **AT BE CH DE FR GB IT LI LU NL SE**

(71) Applicant: **IMPERIAL CHEMICAL INDUSTRIES PLC, Imperial Chemical House Millbank, London SW1P 3JF (GB)**

(72) Inventor: **Lawrence, Jeffrey Cyril, 60 Knowles Avenue, Crowthorne Berkshire (GB)**
Inventor: **Parham, Martin Reginald, 1 Court Gardens Arborfield Court, Arborfield Cross Reading Berkshire (GB)**

(74) Representative: **Roberts, Timothy Wace et al, Imperial Chemical Industries PLC Legal Department : Patents Thames House North Millbank, London SW1P 4QG (GB)**

(54) Herbicidal formulations and their use to combat weeds.

(57) Herbicidal formulations comprising solutions of herbicide acid salts with an organic amine containing at least 8 carbon atoms in an organic solvent having a resistivity at 25°C of from $10^6$ to $10^{10}$ ohm centimetres. Also process for electrostatically spraying these formulations onto weeds.

EP 0 066 946 A1

PP. 31849/EP

0066946

# HERBICIDAL FORMULATIONS AND THEIR USE TO COMBAT WEEDS

This invention relates to herbicidal formulations and more particularly to formulations wherein the herbicide is an acid, and to the use of such formulations as herbicides.

Many known herbicides are acids, or acid derivatives. We have discovered a way of formulating and applying such herbicidal acids whereby increases in herbicidal activity, and sometimes other advantages, may be obtained.

According to the present invention we provide a herbicidal acid formulation comprising a solution of a salt of a herbicidal acid with an organic amine containing at least 8 carbon atoms in an organic solvent, the formulation having a resistivity at 25°C of $10^6$ to $10^{10}$, preferably $10^7$ to $10^9$, ohm centimetres, and optionally containing a surfactant. We further provide a process for combating weeds which comprises applying to the weeds a formulation according to the invention in the form of electrically charged droplets. The invention further comprises certain novel herbicidal acid amine salts.

Herbicidal acids for use in the invention may be of a wide range of different chemical types, including the following types:

A.  Phenoxyalkanoic acids, eg. dichloroprop; MCPB; mecoprop; dichlorprop; 2,4,5-T.

B.  Aryloxyphenoxy alkanoic (particularly propionic) acids; eg. clofop; diclofop; fluazifop; and like compounds in which the ether linkage between the rings is replaced by a sulphur atom or NH = group;

C.  Diphenyl ethers, eg. acifluofen, fomesafen.

D.  Substituted benzoic acids, eg. dicamba, chloramben.

The invention is of particular advantage for use with the herbicide glyphosate.

Glyphosate is the approved common name for the compound N-phosphonomethylglycine ($HOOC.CH_2NH.CH_2P.O(OH)_2$). This compound is the subject of US Patent Specification No. 3799758, the disclosure of which Specification is incorporated herein by reference. Glyphosate is a broad spectrum herbicide, killing both grasses and broad-leaved weeds, and being particularly effective on deep-rooted perennial weed species. It is systemic, moving through the plant system, and is inactivated by the soil, so that subsequently planted crops are not affected by it. In comparison with other known broad-spectrum soil-inactivated herbicides (eg. bipyridylium herbicides such as paraquat) it has several advantages, but also two disadvantages. Its action is rather slow (treated plants take several weeks to die) and it is not rainfast. Rain showers up to several hours after application can wash glyphosate off plants, and thereby stop or reduce its herbicidal action.

We have now discovered that formulations of glyphosate according to the invention, when applied by the method of the invention, have advtangages as compared with known glyphosate formulations, including activity at lower rates.

The salts used in the formulations of the invention are conveniently made by mixing the herbicidal acid with an appropriate amine, preferably in stoichiometric quantities, if required with heating, and in the presence of a suitable polar solvent, eg. an alcohol such as methanol. If required, the solvent may afterwards be separated, eg. by distillation. The amine suitably has at least eight, preferably up to 22, carbon atoms; particularly preferred on grounds of solubility are amines having 15 to 17 carbon atoms. Primary, secondary or tertiary amines may be employed. The solvents are suitably organic diluents, in particular hydrocarbons. The hydrocarbons can be hydrocarbon fractions of various kinds, which are readily commercially available; examples are mixtures containing paraffinic, cycloparaffinic and/or aromatic hydrocarbons such as 'Isopar' G, L and M and white oil (paraffinic hydrocarbons), 'Exsol' D180/220 (paraffinic/cycloparaffinic hydrocarbons), 'Solvesso' 150 and Aromasol H (aromatic hydrocarbons) and kerosene (paraffinic/aromatic hydrocarbons). Vegetable oils, for example groundnut or soyabean oil, may be used. Mixtures of non-polar solvents may be used, eg. to give a diluent of the desired viscosity. High-boiling hydrocarbon diluents are convenient and cheap, but usually have high resistivities (eg. of the order of $10^{11}$ ohm centimetres). To bring down the resistivity of such solvents, they may be mixed with polar diluents, for example ketones, alcohols or aqueous alcohols. Another way of adjusting the resistivity of the solutions is to add an antistatic agent, for example the material ASA 3 sold as a static charge dissipator and consisting of a complex mixture of copper and chromium cations with various organic anions. Other additives useful in reducing the resistivity of hydrocarbon diluents are quaternary ammonium surfactants, as described in our European Patent Application No 39144, the disclosure of which Application is incorporated by reference.

The formulations of our invention conveniently have viscosities of 1 to 50, particularly 5 to 30, centistokes at 25°C; if it is desired to increase the viscosity of formulations according to the invention, this may be done by addition of more viscous oil-soluble diluents, for example polybutenes eg. 'Hyvis' and long-chain chlorinated hydrocarbon products such as 'Cereclor' C42 or C48.

The amount of amine salt in the formulations of the invention may vary within wide limits; amounts of 0.1% to 50%, especially concentrated solutions containing 10 or 20% to 50%, by weight of the salt are preferred. Surfactants may be added to the formulations, conveniently in amounts of from about 2 to about 8% by weight; poly (ethylene oxide) condensate surfactants are among those suitable.

The compositions of our invention are applied to plants by electrostatic spraying without further dilution. This is conveniently carried out by apparatus of the type described in British Patent Specification No. 1569707, the disclosure of which Specification is incorporated herein by reference. Such apparatus conveniently comprises a conductive nozzle of capillary dimensions, to which the formulation is supplied. The nozzle is charged to a potential of about 20-30 kilovolts. There is thereby established a powerful electric field between the nozzle and a surrounding earthed electrode, sufficient to break up liquid delivered to the nozzle into a cloud of electrically charged droplets. Electrical forces then project these towards weeds to be sprayed, and assist in distributing the droplets evenly over such weeds. Further forms of the device of British Patent Specification No. 1569707 are described in British Applications Nos. 2030060A and 7944150, and published European Application No. 31649, the disclosures of which Applications are incorporated herein by reference.

The following Examples illustrate our invention. Unless otherwise stated, resistivities and viscosities were measured at 25°C.


EXAMPLE 1


This Example illustrates a formulation according to the invention. A solution was obtained by mixing together the following ingredients, with warming.

| Ingredient | Parts by weight |
|---|---|
| Glyphosate (ground) | 10 |
| Synprolam 57 | 20 |
| Iso-butanol | 10 |
| Water | 5 |
| Aromasol H | 55 |
| | 100 |

Synprolam 57 is the trade name for a mixture of $C_{15}$ and $C_{17}$ primary alkyl amines, mostly straight-chain or $\alpha$-methyl branched alkyl amines. Aromasol H is the trade name of a high boiling aromatic hydrocarbon diluent. The resistivity of the formulation was measured in a Keithley electrometer at 25°C and found to be $1 \times 10^6$ ohm cm.

## EXAMPLE 2

A formulation according to the invention was made from the following ingredients.

| Ingredient | Parts by weight |
|---|---|
| Glyphosate (ground) | 100 |
| Synprolam 57 | 200 |
| Isobutanol | 100 |
| Water | 25 |
| Aromasol H | 575 |
| | 1000 |

The glyphosate was weighed into a large beaker. The isobutanol was then added followed by the Synprolam 57. Finally about one half of the Aromasol H was added and the mixture was stirred with strong heating (hot plate set to 150°C).

When the mixture looked reasonably homogeneous (ie. no large lumps), the water was added. The mixture tended to clear and a temperature rise was noticed. The heating and stirring was continued until all the glyphosate had dissolved. The solution was then clarified by filtering under reduced pressure. The resulting clear solution was then made up to volume with the rest of the Aromasol H.

$$\text{Resistivity} = 1.9 \times 10^6 \text{ ohm cm}^{-1}$$
$$\text{Viscosity} = 29.3 \text{ cSt } (20°C)$$

## EXAMPLE 3

The formulation of Example 1 was tested by spraying onto plants through a device of the type described in British Patent Specification No. 1569707, at two different application rates, 1.6 kg/hectare and 0.2 kg/hectare, using 4 replicates per treatment. The plants were assessed two weeks after spraying and the results are shown in the Table below.

| Plants | % kill 1.6 kg/hectare | % kill 0.2 kg/hectare |
| --- | --- | --- |
| Soya | 100 | 10 |
| Sugar beet | 100 | 96 |
| Cyperus | 100 | 53 |
| Echinochloa | 86 | 33 |

The kill obtained on weeds and sugar beet compared favourably with results obtained using commercial formulations of glyphosate in conventional high volume sprays.

EXAMPLE 4

This Example illustrates the preparation of a salt with a different chain primary amine.

| Ingredient | Parts by weight |
|---|---|
| Glyphosate | 26.7 |
| 'Synprolam' 35 | 38.5 |
| Iso-butanol | 29.1 |
| Water | 0.3 |
| 'Aromasol' H | 5.4 |
| | 100.00 |

The ingredients were heated to 100°C under reflux with continuous stirring for 6 hours, then cooled. The product was a pale yellow paste containing 26.7% glyphosate. 'Synprolam' 35 is the trade name for a commercially available mixture of $C_{13}$ and $C_{15}$ primary alkyl amines.

EXAMPLE 5

This Example illustrates the preparation of a sprayable formulation from the product of Example 4.

| Ingredient | Parts by weight |
|---|---|
| Glyphosate 'Synprolam' 35 paste | 44.2 |
| Iso-butanol | 10.6 |
| Water | 1.0 |
| 'Solvesso' 100 | 44.2 |
| | 100.00 |

This gave a clear solution containing 106g/litre glyphosate, density 0.9g cm$^{-3}$, resistivity 3 x 10$^6$ ohm cm. 'Solvesso' 100 is the trade name of a hydrocarbon solvent.

In the following Examples 6 to 10, the formulations were made up by mixing together the ingredients in the proportions shown. 'Armeen' and 'Synprolam' are trade names.

EXAMPLE 6

| Ingredient | % weight |
|---|---|
| Fomesafen | 10.5 |
| 'Armeen' 12D | 5.9 |
| 'Aromasol' H | 83.6 |
| | 100.00 |

'Armeen' 12D is technical dodecylamine.
Resisitivity = 5 x 10$^7$ ohm cm.

EXAMPLE 7

| Ingredient | % weight |
|---|---|
| 2,4-DB | 26.0 |
| 'Armeen' 12D | 20.7 |
| 'Aromasol' H | 53.3 |
| | 100.00 |

Resistivity = 2.4 x 10$^7$ ohm cm.

EXAMPLE 8

| Ingredient | % weight |
|---|---|
| 2,4-D | 13.8 |
| 'Armeen' 12D | 11.7 |
| 'Aromasol' H | 74.5 |
| | 100.00 |

Resistivity = $1.3 \times 10^8$ ohm cm.

EXAMPLE 9

| Ingredient | % weight |
|---|---|
| 2,4-D | 16.0 |
| 'Armeen' 8D | 10.5 |
| 'Aromasol' H | 73.5 |
| | 100.00 |

Resistivity = $2.6 \times 10^7$ ohm cm.

'Armeen' 8D is technical octylamine.

EXAMPLE 10

| Ingredient | % weight |
|---|---|
| 2,4-D | 11.2 |
| 'Armeen' 16D | 12.6 |
| Tetrahydrofurfuryl alcohol | 5.6 |
| 'Aromasol' H | 70.6 |
| | 100.0 |

Resistivity = 2.5 x 10$^7$ ohm cm.

'Armeen' 16D is technical hexadecylamine.

EXAMPLE 11

The formulations of Example 6 and 7 were tested in the glasshouse, when applied via the 'Electrodyn' sprayer (as described in published European Patent Application No. 31649, Figures 7-11) against soya bean plants and a range of grass weeds. Results are shown in Table 2 in comparison with conventional aqueous application. In some cases surfactant ('Synperonic' NP5 or 'Agral' 90) was added. Under the heading "Applied by", "ED" indicates application by 'Electrodyn' sprayer, "CV" by conventional aqueous formulation in 250 litres water/hectare. 'Agral' 90 is the trade name for a polyethleneoxide wetter. 'Synperonic' NP5 is the trade name for a nonyl phenol/ethylene oxide condensate surfactant. The Table illustrates that, in a number of cases, electrostatic spray application of the formulations of the invention gives better results than application of conventional formulations by conventional means.

EXAMPLE 12

The formulations of Examples 8-10 were tested in the glasshouse, against wheat barley and various weed species. Results (% foliar kill) assessed 21 days after treatment, are shown in Table 3: all figures are means of three replicates. The letters "ED" and "CV" have the same meanings as in Table 2. It will be seen that the formulations of the invention, applied by electrostatic spraying, are generally more active than conventional formulations conveniently applied. "Fernimine" is a trade name for conventional commercially available formulations of the herbicide 2,4-D.

TABLE 2

| Formulation | Added Surfactant | Rate (kg a.i./ha) | Applied By | % foliar kill at 25 days after treatment | | | | | | |
|---|---|---|---|---|---|---|---|---|---|---|
| | | | | Soya | Ipomoea | Xanthium | Abutilon | Echinocloa | Setaria | Lolium |
| Example 6 | None | 0.5 | ED | 12.5 | 100 | 100 | 100 | 97 | 100 | 100 |
| Example 6 | 50g/litre 'Synperonic' NP5 | 0.5 | ED | 12.5 | 100 | 100 | 100 | 80 | 100 | 80 |
| Example 6 | None | 1.0 | ED | 37 | 100 | 100 | 100 | 100 | 100 | 100 |
| Example 6 | 50g/litre 'Synperonic' NP5 | 1.0 | ED | 25 | 100 | 100 | 100 | 100 | 100 | 97 |
| Example 6 | 0.1% Agral 9 | 1.0 | CV | 15 | 100 | 100 | 100 | 5 | 40 | 5 |
| Example 7 | None | 1.0 | ED | 45 | 95 | 100 | 35 | 65 | 20 | 30 |
| Example 7 | 50g/litre 'Synperonic' NP5 | 1.0 | ED | 45 | 65 | 100 | 60 | 55 | 15 | 30 |
| Example 7 | 0.1% Agral 9 | 1.0 | CV | 40 | 100 | 100 | 80 | 0 | 10 | 5 |

TABLE 3

| Formulation | Rate (kg/ha) | Applied By | Wheat | Barley | Chrysanth-emum | Galium | Myosotis | Veronica | Polygonum | Stellaria | Sinatis | Matricaria |
|---|---|---|---|---|---|---|---|---|---|---|---|---|
| Example 8 | 0.15 | ED | 8 | 5 | 20 | 23 | 10 | 33 | 80 | 10 | 60 | 10 |
|  | 0.25 | ED | 17 | 8 | 23 | 30 | 20 | 90 | 100 | 20 | 93 | 20 |
|  | 0.35 | ED | 20 | 8 | 53 | 40 | 27 | 57 | 98 | 27 | 87 | 27 |
| Example 9 | 0.15 | ED | 0 | 8 | 13 | 20 | 7 | 37 | 82 | 10 | 30 | 10 |
|  | 0.25 | ED | 10 | 13 | 37 | 30 | 13 | 60 | 87 | 27 | 60 | 20 |
|  | 0.35 | ED | 10 | 20 | 40 | 33 | 20 | 43 | 80 | 33 | 67 | 30 |
| Example 10 | 0.15 | ED | 0 | 2 | 20 | 5 | 8 | 10 | 95 | 13 | 27 | 13 |
|  | 0.25 | ED | 0 | 0 | 23 | 10 | 13 | 10 | 30 | 17 | 40 | 20 |
|  | 0.35 | ED | 2 | 5 | 43 | 10 | 30 | 23 | 100 | 37 | 87 | 27 |
| 2,4-D | 0.15 | CV | 0 | 0 | 5 | 0 | 0 | 13 | 7 | 10 | 27 | 10 |
| dimethyl- | 0.25 | CV | 0 | 0 | 13 | 0 | 0 | 10 | 10 | 13 | 33 | 10 |
| amine salt 'Fernimine' | 0.35 | CV | 0 | 0 | 17 | 7 | 0 | 20 | 27 | 20 | 73 | 20 |

EXAMPLE 13

The formulation of Example 2 was compared against grass weeds and soya in the glasshouse with a conventional commercially available formulation of glyphosate. The former was applied undiluted through the 'Electrodyn' sprayer; the latter in 250 litres/water/hectare. Both were applied at 0.6 kg active ingredient per hectare. Figures are shown in Table 4 for % top kill (T) (21 days after treatment) and % regrowth control (R) (42 days after treatment). It will be seen that electrostatic application for the formulation of Example 1 gives notably better results against several weeds.

TABLE 4

| Formulation | Assessment | Sorghum halepense | Cynodon dactylon | Ottocloa nodosa | Paspalum conjugatum | Agropyron repens | Soya |
|---|---|---|---|---|---|---|---|
| Example 1 | T | 83 | 43 | 70 | 53 | 95 | 90 |
| | R | 100 | 98 | | 100 | 100 | |
| Glyphosate | T | 47 | 37 | 25 | 17 | 90 | 30 |
| (commercial | R | 91 | 96 | | 100 | 86 | |
| aqueous | | | | | | | |
| formulation) | | | | + | | | + |

+ No control available to allow regrowth assessment.

TWR/jw

SPEC242

13.4.82

- 14 -

1. A herbicidal acid formulation comprising a solution of a salt of a herbicidal acid with an organic amine containing at least 8 carbon atoms in an organic solvent, the formulation having a resistivity at 25°C of from $10^6$ to $10^{10}$ ohm centimetres.

2. A formulation as claimed in claim 1 which further comprises a surfactant.

3. A formulation as claimed in either of claims 1 or 2 in which the herbicidal acid is a phenoxyalkanoic acid, an aryloxyphenoxypropionic acid, a diphenyl ether or a substituted benzoic acid.

4. A formulation as claimed in either of claims 1 or 2 in which the herbicidal acid is glyphosate.

5. A formulation as claimed in any of claims 1 to 4 in which the amount of herbicidal acid salt is from 0.1 to 50% by weight of the formulation.

6. A formulation as claimed in claim 5 in which the amount of the herbicidal acid salt is from 10 to 50% by weight of the formulation.

7. A formulation as claimed in any of claims 1 to 6 wherein the organic solvent comprises predominantly a hydrocarbon solvent.

8. A formulation as claimed in claim 7 in which the organic solvent additionally comprises a minor proportion of an alcohol.

9. A process of combating weeds which comprises applying to the weeds a formulation as claimed in any of claims 1 to 8 in the form of electrically charged droplets.

10. Salts of N-phosphonomethylglycine with primary alkyl amines having from 13 to 17 carbon atoms.

## EUROPEAN SEARCH REPORT

### European Patent Office

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | EP-A-0 006 293 (I.C.I.) <br> * Page 3, line 32 - page 4, line 22; page 4, lines 31-32; examples * <br><br> --- | 1-9 | A 01 N 25/02 <br> A 01 N 57/20 |
| Y | DE-B-1 124 296 (AMCHEM) <br> * Claims * <br><br> --- | 1-9 | |
| D,X | US-A-3 799 758 (J.E. FRANZ) <br> * Claim 5 * <br><br> --- | 10 | |
| A | US-A-2 900 411 (J. HARWOOD et al.) <br><br> --- | 1,3 | |
| A | EP-A-0 019 384 (I.C.I.) <br><br> ----- | 1-9 | |

| | |
|---|---|
| | **TECHNICAL FIELDS SEARCHED (Int. Cl. ³)** |
| | A 01 N |

The present search report has been drawn up for all claims

| Place of search | Date of completion of the search | Examiner |
|---|---|---|
| THE HAGUE | 27-08-1982 | DECORTE D. |